(19) Europäisches Patentamt
European Patent Office
Office européen des brevets

(11) Veröffentlichungsnummer: **0 358 892**
**A2**

(12) # EUROPÄISCHE PATENTANMELDUNG

(21) Anmeldenummer: **89113520.4**

(22) Anmeldetag: **22.07.89**

(51) Int. Cl.5: **C08L 77/00 , C08L 71/12**

(30) Priorität: **15.09.88 DE 3831348**

(43) Veröffentlichungstag der Anmeldung:
**21.03.90 Patentblatt 90/12**

(84) Benannte Vertragsstaaten:
**BE DE FR GB IT NL**

(71) Anmelder: **HÜLS AKTIENGESELLSCHAFT**
**- RSP Patente / PB 15 - Postfach 13 20**
**D-4370 Marl 1(DE)**

(72) Erfinder: **Neugebauer, Wolfgang, Dr.**
**Karl-Leisner-Strasse 3**
**D-4408 Dülmen(DE)**

(54) **Schlagzähe thermoplastische Formmassen auf Basis von Polyphenylenether-Pfropfcopolymeren und Polyamiden sowie Verfahren zu ihrer Herstellung.**

(57) Ziel der Erfindung war die Herstellung von Formmassen auf Basis von Polyphenylenethern und Polyamiden, die sich durch eine hohe Zähigkeit, eine sehr gute Phasenhaftung, eine hohe Lösemittelbeständigkeit sowie eine hohe Wärmeformbeständigkeit auszeichnen.

Die jetzt gefundenen Formmassen enthalten 70 bis 250 Teile eines Polyamids und 100 Teile eines Pfropfcopolymeren, welches durch Umsetzung von 100 Teilen eines Polyphenylenethers mit 0,1 bis 6 Teilen einer Mischung aus 10 bis 50 Mol-% Maleinsäureanhydrid und 90 bis 50 Mol-% einer vinylaromatischen Verbindung hergestellt wird.

Die Formmassen werden zur Herstellung technischer Artikel wie z. B. Rohre, Platten oder Gehäuse verwendet.

EP 0 358 892 A2

# Schlagzähe thermoplastische Formmassen auf Basis von Polyphenylenether-Pfropfcopolymeren und Polyamiden sowie Verfahren zu ihrer Herstellung

Polyphenylenether (PPE) sind technische Hochleistungsthermoplaste mit hohen Schmelzviskositäten und Erweichungspunkten. Sie kommen vor allem dort zum Einsatz, wo es auf Beständigkeit bei hohen Temperaturen ankommt (vgl. US-PSS 3 306 874, 3 306 875, 3 257 357 und 3 257 358). Formteile aus reinen Polyphenylenethern sind allerdings wegen ihrer schlechten Schlagzähigkeit spröde, und die Lösemittelbeständigkeit ist unbefriedigend; daher setzt man üblicherweise Mischungen aus Polyphenylenethern mit anderen Thermoplasten ein.

Abmischungen von Polyphenylenethern mit Polyamiden weisen eine gute Lösemittelbeständigkeit und eine gute Fließfähigkeit auf (DE-OS 16 94 290 und JP-OS 78/47 390). In der Regel werden aber spröde Produkte erhalten, da die beiden Komponenten unverträglich sind.

Es ist daher vorgeschlagen worden, die Verträglichkeit beider Polymeren durch Zusatz einer ausreichenden Menge eines Fließmittels, z. B. eines organischen Phosphats (vgl. EP-OS 0 129 825) oder eines Diamids (vgl. EP-OS 0 115 218), zu erhöhen. Der verbesserten Verträglichkeit steht jedoch eine erheblich reduzierte Wärmeformbeständigkeit gegenüber. Den gleichen Nachteil weisen Formmassen auf, denen Copolymere aus Styrol und ungesättigten Säurederivaten zugesetzt worden sind (vgl. EP-OS 0 046 040).

Gegenstand der EP-PS 0 024 120 sind Harzmassen, die aus einem Polyphenylenether, einem Polyamid, einer dritten Komponente und gegebenenfalls hochmolekularen Kautschuken bestehen. Als dritte Komponente wird ein flüssiges Dienpolymer, ein Epoxid oder eine Verbindung mit einer Doppel- oder Dreifachbindung und einer funktionellen Gruppe (wie z. B. Säure-, Anhydrid-, Ester-, Amino- oder Alkoholgruppe) eingesetzt. Die Zähigkeit der erhaltenen Harzmassen reicht aber für viele Anwendungen nicht aus.

Eine bessere Verträglichkeit der beiden Phasen wird durch eine Funktionalisierung des Polyphenylenethers, z. B. mit Maleinsäureanhydrid in Gegenwart von Radikalbildnern, erreicht (JP-OS 84/066 452). Dieser Vorteil wird allerdings mit einer partiellen Vergelung der PPE-Phase erkauft. In WO 87/00 540 gelingt die Funktionalisierung von Polyphenylenethern ohne Radikalbildner mit Maleinsäureanhydrid nur in Gegenwart von speziellen Triblockcopolymeren ausreichend gut, während in der US-PS 4 654 405 die Umsetzung von Polyphenylenetherpulver mit Maleinsäureanhydrid, ebenfalls in Abwesenheit von Radikalbildnern, und die weitere Abmischung mit Polyamiden beschrieben wird. Der Funktionalisierungsgrad ist hier jedoch noch nicht ausreichend.

In der EP-OS 0 185 054 wird die Funktionalisierung von Polyphenylenethern durch Umsetzung der Polymeren mit Hydroxypolycarbonsäuren bzw. deren Derivaten in der Schmelze beschrieben. Nach Abmischen mit Polyamiden erhält man Formmassen, deren Reißdehnungs- und Kerbschlagwerte auf eine nicht befriedigende Anbindung an den Phasengrenzflächen schließen lassen.

Gegenstand der EP-OS 0 195 815 ist die Funktionalisierung von Polyphenylenethern mit Trimellitsäureanhydridchlorid in Lösung. Die Blends mit Polyamiden scheinen zwar tendenziell besser als im vorherigen Fall zu sein, jedoch bedingt die beschriebene Funktionalisierung, daß entweder Chlorwasserstoff entweicht oder bei Zusatz eines tertiären Amins beträchtliche Mengen an Ammoniumchloriden entstehen und somit Korrosionsprobleme auftreten. Die wirtschaftlich interessante Direktisolation des Polyphenylenethers durch Abziehen des Lösungsmittels kann in diesem Fall nicht angewendet werden.

In der EP-OS 0 211 201 wird eine Zusammensetzung aus Polyphenylenethern und Polyamiden angegeben, die durch Verkappen der endständigen OH-Gruppen des Polyphenylenethers und anschließende Polymerisation eines Lactams hergestellt wird. Das Verkappungsmittel wirkt in diesem Fall als Promoter für die Lactampolymerisation. Geeignete Promotoren sind u.a. Maleinsäureanhydrid, Cyanurchlorid, N,N′-Carbonyldiimidazol und Phenylchlorformiat. Diese Zusammensetzungen können jedoch in der Praxis nicht befriedigen. Die funktionellen Gruppen der Promotoren sind chemisch nicht stabil, und die Beschränkung auf Polyamide, die durch Polymerisation von Lactamen erhalten werden, wird als einengend empfunden.

Aus der deutschen Offenlegungsschrift 36 00 366 sind thermoplastische Formmassen bekannt, die als wesentliche Komponenten einen Polyphenylenether, ein Kammpolymer mit einem Kohlenwasserstoff als Hauptkette und Polyphenylenethern als Seitenketten, ein funktionalisiertes Polyethylen und ein Polyamid enthalten. Es handelt sich also um eine recht komplexe Mischung, bei der jede der 4 Komponenten erforderlich ist, um sowohl eine gute Verträglichkeit als auch eine hohe Schlagzähigkeit und Wärmeformbeständigkeit zu gewährleisten. Es wäre wünschenswert, könnte man diese Ziele auch auf einfachere Weise erreichen.

Die DE-OSS 36 15 393 und 36 21 805 beschreiben Formmassen, die neben einem Polyamid eine umgeschmolzene Vorformmasse enthalten. Letztere besteht aus einem Polyphenylenether, einem Polyoctenylen und mindestens einer Säurekomponente wie z. B. Maleinsäureanhydrid. In beiden Fällen ist es

erforderlich, den Polyphenylenether mit einer chemisch aggressiven Säurekomponente umzuschmelzen und einen Schlagzähmacher zuzusetzen, um ein qualitativ befriedigendes Niveau der Kerbschlagzähigkeit zu erreichen; ein ähnliches Verfahren wird in der EP-OS 0 232 363 beschrieben.

Das in der JP-OS 84/86 653 beschriebene Verfahren sieht vor, 100 Teile Polyphenylenether mit 10 bis 300 Teilen einer Mischung aus 50 bis 99 % Styrol und 50 bis 1 % ungesättigten Carbonsäuren oder Anhydriden radikalisch zu pfropfen und das Produkt mit Polyamiden abzumischen; die entstehenden Formteile weisen zwar gute mechanische Eigenschaften auf, doch ist infolge des beträchtlichen Styrolanteils die Wärmeformbeständigkeit beeinträchtigt. Versucht man diesen Nachteil durch Erhöhen des Anhydridanteils auszugleichen, so werden Formmassen mit stark verschlechterten Eigenschaften, z. B. ungenügender Schlag- und Kerbschlagzähigkeit, erhalten.

Der Erfinder der EP-PS 0 147 874 beabsichtigte, durch Zusatz kleiner Mengen (0,1 - 1,9 Gew.-%) eines Styrol-Maleinsäureanhydrid-Copolymeren (Maleinsäureanhydridanteil 41 bis 50 Mol-%) zu einer Mischung aus Polyphenylenethern und Polyamiden die Wärmeformbeständigkeit nicht zu beeinträchtigen. Die Beispiele belegen jedoch, daß mit diesem Zusatz, wahrscheinlich wegen der unzureichenden Wechselwirkung mit dem Polyphenylenether, keine Verbesserung der vollkommen ungenügenden mechanischen Eigenschaften erreicht wird.

Die aus dem Stand der Technik bekannten Formmassen sind also entweder nur auf aufwendige Weise herstellbar oder im Eigenschaftsbild der aus ihnen hergestellten Formteile unbefriedigend. Ziel der Erfindung war es, diese Nachteile zu vermeiden.

Mit der vorliegenden Erfindung lassen sich Formmassen auf Basis von Polyphenylenethern und Polyamiden herstellen, die sich durch eine hohe Zähigkeit, eine sehr gute Phasenhaftung (erkennbar an hohen Reißdehnungswerten), eine hohe Lösemittelbeständigkeit sowie hohe Wärmeformbeständigkeit auszeichnen. Sie enthalten

- 100 Teile eines Pfropfcopolymeren, das durch Umsetzung von 100 Teilen eines Polyphenylenethers mit 0,1 bis 6 Teilen einer Mischung aus 10 bis 50 Mol-% Maleinsäureanhydrid und 90 bis 50 Mol-% einer vinylaromatischen Verbindung erhältlich ist;
- 70 bis 250 Teile eines Polyamids;
- 0 bis 200 Teile einer gegebenenfalls funktionalisierten Schlagzähkomponente und
- ggf. weitere Zusatzstoffe wie Flammschutzmittel Pigmente, Oligo- und Polymere, Antistatika, Stabilisatoren, Verarbeitungshilfsmittel oder Verstärkungsmittel.

Als vinylaromatische Verbindung wird Styrol bevorzugt.

Mit Styrol-Maleinsäureanhydrid-Copolymeren gepfropfte Polyphenylenether sind aus der JP-OS 74/2343 und JP-OS 74/20 379 bekannt. In der JP-OS 74/2343 werden Copolymere beschrieben, die als Hauptkette ein Styrol-Maleinsäureanhydrid-Copolymeres enthalten, auf das ein vorzugsweise relativ niedermolekularer Polyphenylenether (Polymerisationsgrad 10 - 200, vorzugsweise 10 - 100) durch Veresterung der endständigen phenolischen Hydroxylgruppe als Seitenkette aufgepfropft ist. Die Copolymeren enthalten hierbei auf 100 Teile Polyphenylenether 15 bis 90 Teile Styrol und 1 bis 10 Teile Maleinsäureanhydrid. In JP-OS 74/20 379 werden Blends aus derartigen Copolymeren und Vinylcopolymeren beschrieben. In keiner der beiden Offenlegungsschriften wird eine Verwendung dieser Copolymeren für Blends mit Polyamiden angedeutet. Die von uns verwendeten Pfropfcopolymeren aus Polyphenylenethern, Styrol und Maleinsäureanhydrid unterscheiden sich von den beschriebenen vor allem in folgenden Punkten:

- sie bestehen aus einer Polyphenylenether-Hauptkette und kurzen Seitenketten aus Styrol-Maleinsäureanhydrid-Copolymeren;
- sie liegen außerhalb der beschriebenen Zusammensetzung; insbesondere enthalten sie weniger Styrol und
- das Styrol-Maleinsäureanhydrid-Copolymere wird nicht an die phenolische Endgruppe des Polyphenylenethers unter Bildung eines relativ labilen Halbesters gebunden, sondern pfropft auf die Methylgruppen des Polyphenylenethers auf, wobei eine auch in der Schmelze stabile Verbindung entsteht.

Zwar ist das Pfropfen einer Mischung von Styrol und Maleinsäureanhydrid auf polymere Substrate, die aktive oder labile Wasserstoffatome besitzen, ohne Radikalstarter bei Temperaturen oberhalb von etwa 120 °C grundsätzlich bekannt (vgl. DE-OS 21 08 749 und US-PS 3 708 555), doch war nicht zu erwarten, daß Polyphenylenether für diese Pfropfreaktion so geeignet sein würden.

Als Polyphenylenether kommen Polymere infrage, die aus den Einheiten II

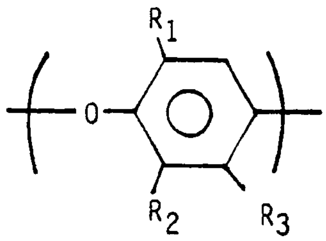

II

aufgebaut sind, wobei $R_1$, $R_2$ und $R_3$ unabhängig voneinander Wasserstoffe, Alkyl- oder Arylreste mit bis zu 10 C-Atomen oder Benzylreste mit der Einschränkung bedeuten, daß $R_1$ nur dann Wasserstoff sein darf, wenn $R_2$ ein tertiärer Alkylrest, insbesondere ein tertiärer Butylrest, ist.

Bevorzugt werden Polyphenylenether eingesetzt, die zu 80 bis 100 % aus Einheiten der Formel I

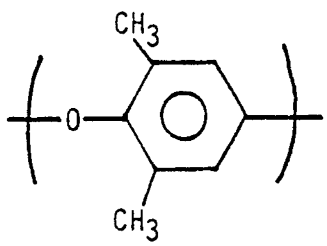

I

und zu 20 bis 0 % aus Einheiten der Formel II aufgebaut sind. In diesem Fall ist die gleichzeitige Bedeutung $R_1 = R_2 = CH_3$ und $R_3 = H$ ausgeschlossen.

Die Polyphenylenether können z. B. in Gegenwart von komplexbildenden Mitteln, wie Kupferbromid und Morpholin, aus den Phenolen hergestellt werden (vgl. DE-OSS 32 24 692 und 32 24 691). Die Viskositätszahlen, bestimmt nach DIN 53 728 in Chloroform bei 25 °C, liegen im Bereich von 20 bis 80 $cm^3/g$.

Als vinylaromatische Verbindung kann ein substituiertes Styrol mit bis zu 20 C-Atomen wie z. B. Alpha-Methyl-Styrol, p-Methylstyrol, p-tert.-Butylstyrol oder Inden eingesetzt werden, jedoch wird dem unsubstituierten Styrol wegen der leichten Verfügbarkeit der Vorzug gegeben.

Als Polyamide kommen Homo- und Copolyamide in Frage, die vorzugsweise ausschließlich aliphatischer Struktur sind. Insbesondere seien hier die 6-, 46-, 66-, 612-, 11-, 12- und 1012-Polyamide aufgeführt. Die Kennzeichnung der Polyamide entspricht internationaler Norm, wobei die erste(n) Ziffer(n) die C-Atomzahl des Ausgangsamins und die letzte(n) Ziffer(n) die C-Atomzahl der Dicarbonsäure angeben. Wird nur eine Zahl angegeben, so bedeutet dies, daß von einer Aminocarbonsäure bzw. deren Lactam ausgegangen worden ist (H. Domininghaus "Die Kunststoffe und ihre Eigenschaften", VDI Verlag, 1976, Seite 272). Geeignet sind aber auch gemischte aliphatisch-aromatische Copolyamide (vgl. US-PSS 2 071 250, 2 071 251, 2 130 523, 2 130 948, 2 241 322, 2 312 966, 2 512 606, 3 393 210; Kirk-Othmer, Encyclopedia of chemical technology, Vol. 18, John-Wiley & Sons (1982), Seiten 328 und 435). Das Zahlenmittel des Molekulargewichtes der Polyamide liegt vorzugsweise zwischen 10 000 und 50 000.

Für anspruchsvolle Anwendungszwecke kann es sinnvoll sein, zusätzlich einen Schlagzähmacher zuzugeben. Dieser Schlagzähmacher kann z. B. ein Kautschuk oder ein teilkristalliner Thermoplast sein. In Frage kommen beispielsweise Ethylen-Propylen-Copolymere, Ethylen-Propylen-Dien-Terpolymere, Polypentenylen, Polyoctenylen, Polyethylen oder Mischungen daraus. Der Schlagzähmacher kann dem Stand der Technik entsprechend funktionalisiert sein, z. B. mit Maleinsäureanhydrid, ggf. in Anwesenheit von Styrol. Bevorzugte Schlagzähmacher sind Polyoctenylen oder Ethylen- Propylen(-Dien)-Copolymere.

Die Formmassen können zusätzlich noch unmodifizierte oder schlagzähmodifizierte Polystyrolharze enthalten. Zur Erzielung einer hohen Wärmeformbeständigkeit werden in der Regel nur geringe Mengen dieser Harze eingesetzt.

Die Pfropfung des Polyphenylenethers mit dem Gemisch aus Maleinsäureanhydrid und Styrol kann bei Temperaturen zwischen 100 und 310° C in Lösung, in fester Phase oder in der Schmelze durchgeführt werden. Sofern dieses erwünscht ist, können auch Radikalstarter wie z. B. tert. Butylperbenzoat, Di-tert.-Butylperoxid oder Cumylhydroperoxid zugegeben werden. Bevorzugte Ausführungsformen sind:

a) Eine Lösung von 100 Teilen Polyphenylenether in 50 bis 1 000 Teilen eines inerten Lösemittels wie z. B. Toluol, Xylol, Ethylbenzol oder Chlorbenzol wird mit der benötigten Menge an Maleinsäureanhydrid und Styrol versetzt und die Temperatur erhöht, wobei Überdruck angewandt werden kann. Das

Produkt wird durch Ausfällen oder Abdampfen des Lösemittels, z. B. in einem Entgasungsextruder, isoliert.

b) Ein Polyphenylenethergranulat wird bei Temperaturen unterhalb von 80 °C mit einer flüssigen Mischung aus Maleinsäureanhydrid und Styrol versetzt. Nach Eindiffundieren der Mischung wird die Pfropfung bei Temperaturen über 100 °C entweder in fester Phase oder in der Schmelze unter Verwendung eines Ein- oder Zweischneckenextruders durchgeführt.

Soll die Formmasse eine Schlagzähkomponente enthalten, so kann es vorteilhaft sein, diese mit dem Polyphenylenether vorzumischen und auf diese Mischung Styrol und Maleinsäureanhydrid zu pfropfen.

Die Vereinigung der Polyamide mit dem Polyphenylenether-Pfropfcopolymeren erfolgt durch Mischen der beiden Schmelzen in einem gut knetenden Aggregat bei 250 bis 350 °C, vorzugsweise bei 270 bis 310 °C. Es ist vorteilhaft, die beiden Komponenten trocken vorzumischen und zu extrudieren oder das Polyamid in die Schmelze des Polyphenylenether-Pfropfcopolymeren zu dosieren.

Die erfindungsgemäßen thermoplastischen Massen können daneben einen Flammschutz sowie weitere Zusatzstoffe, wie Pigmente, Oligo- und Polymere, Antistatika, Stabilisatoren und Verarbeitungshilfsmittel sowie Verstärkungsmittel, enthalten. Der Anteil der Verstärkungsmittel kann bis zu 50 %, der der Flammschutzmittel bis zu 15 % und der aller übrigen Zusatzstoffe insgesamt bis zu 5 %, jeweils bezogen auf die gesamte Formmasse, betragen.

Als Flammschutzmittel sind besonders aromatische Phosphorverbindungen, wie Triphenylphosphinoxid und Triphenylphosphat, geeignet. Man kann auch ein übliches halogenhaltiges Flammschutzmittel verwenden. Infrage kommen dabei Halogen enthaltende organische Verbindungen, wie sie z. B. in der Monographie von H. Vogel "Flammfestmachen von Kunststoff", Hüthig-Verlag, 1966, auf den Seiten 94 bis 102 beschrieben werden. Es kann sich dabei aber auch um halogenierte Polymere, wie z. B. halogenierte Polyphenylenether (siehe DE-OS 33 34 068) oder bromierte Oligo- bzw. Polystyrole, handeln. Die Verbindungen sollen mehr als 30 Gewichtsprozent Halogen enthalten.

Im Falle des Einsatzes der halogenhaltigen Flammschutzmittel empfiehlt es sich, einen Synergisten zu verwenden. Geeignet sind Verbindungen des Antimons, Bors und des Zinns. Diese werden im allgemeinen in Mengen von 0,5 bis 10 Gewichtsprozent, bezogen auf die thermoplastischen Massen, eingesetzt.

Als Verstärkungsmittel eignen sich insbesondere Glas- und Kohlenstofffasern.

Geeignete Stabilisatoren umfassen organische Phosphite, wie z. B. Didecylphenylphosphit und Trilaurylphosphit, sterisch gehinderte Phenole sowie Tetramethylpiperidin-, Benzophenon- und Triazolderivate.

Als Verarbeitungshilfsmittel eignen sich Wachse, wie z. B. oxidierte Kohlenwasserstoffe sowie ihre Alkali- und Erdalkalisalze.

Die erhaltenen Formmassen lassen sich mit den für die Thermoplastverarbeitung üblichen Verfahren, wie z. B. Spritzgießen und Extrusion, zu Formkörpern verarbeiten.

Beispiele für technische Anwendungsgebiete sind Rohre, Platten, Gehäuse und sonstige technische Artikel für den Automobil-, Elektro- und Feinwerksektor.

Die erfindungsgemäßen Formmassen zeichnen sich gegenüber den Produkten des Standes der Technik durch eine hohe Zähigkeit bei guter Wärmeformbeständigkeit und Lösemittelbeständigkeit aus.

Die Viskositätszahl (J) des Polyphenylenethers wurde nach DIN 53 728 bei 25 °C in Chloroform (Konzentration 5 g/l) in $cm^3/g$ gemessen.

Die relative Viskosität $Eta_{rel}$ des Polyamids wurde mit einem Ubbelohde-Viskosimeter bei 25 °C in m-Kresol (Konzentration 5 g/l) bestimmt.

Die Reißdehnung (Epsilon $_R$) wurde nach DIN 53 455 an bei 290 °C gespritzten Schulterstäben bestimmt.

Zur Messung der Kerbschlagzähigkeit nach DIN 53 453 wurden bei 290 °C gespritzte Normkleinstäbe verwendet.

## Beispiele

### 1. Polyphenylenether

Die Polyphenylenether erhält man durch oxidative Kupplung von 2,6-Dimethylphenol, Abstoppen der Reaktion bei dem gewünschten J-Wert und anschließende Reaktionsextraktion gemäß DE-OSS 33 13 864 und 33 32 377.

### Beispiel 1.1

Entsprechend der allgemeinen Vorschrift wird ein Polyphenylenether mit einem J-Wert von 55 $cm^3/g$ hergestellt. Das Lösemittel wird durch Abdampfen entfernt, und die Schmelze wird über einen Entgasungsextruder bei 310 °C extrudiert; anschließend wird granuliert und getrocknet.

2. Herstellung des Polyphenylenether-Pfropfcopolymeren

Zu 2,0 kg Polyphenylenether aus Beispiel 1.1 wird in einem Labormischer bei Raumtemperatur portionsweise eine flüssige Mischung (Temperatur 55 °C) aus 20 g Maleinsäureanhydrid und 24 g Styrol so langsam gegeben, daß das Granulat dabei nicht verklebt.

Das so behandelte Granulat wird in einem Leistritz-Doppelschneckenextruder LSM 30.34 bei 290 °C Schmelzetemperatur umgeschmolzen, stranggranuliert und getrocknet. Ein Teil des Produkts wird in Toluol gelöst, mit Aceton gefällt und noch zweimal unter Verwendung des gleichen Lösemittels umgefällt. Die Titration ergibt 0,73 Gewichtsprozent aufgepfropfte Bernsteinsäureanhydridgruppen.

3. Formmassen ohne Schlagzähkomponente

Als Polyamid 66 wird ULTRAMID® A4, ein Produkt der BASF AG, D-6700 Ludwigshafen, eingesetzt.

Als Polyamid 12 wird VESTAMID® L 1901, ein Produkt der HÜLS AKTIENGESELLSCHAFT, D-4370 Marl, eingesetzt.

Als Polyamid 6 wird ULTRAMID® B4, ein Produkt der BASF AG, D-6700 Ludwigshafen, eingesetzt.

Vergleichsbeispiel A (gemäß EP 0 024 120)

Eine Mischung aus 2,0 kg Polyphenylenether gemäß Beispiel 1.1, 3,0 kg Polyamid 12 und 20 g Maleinsäureanhydrid wird in einem Leistritz-Doppelschneckenextruder LSM 30.34 bei einer Schmelzetemperatur von 290 °C gemischt. Anschließend wird granuliert und getrocknet.

Vergleichsbeispiel B (gemäß JP-OS 84/066 452)

20 g Maleinsäureanyhdrid und 10 g Dicumylperoxid werden in einem Doppelschneckenextruder zu 2,0 kg Polyphenylenether gemäß Beispiel 1.1 bei einer Schmelzetemperatur von 290 °C zugemischt. Anschließend wird granuliert und getrocknet. 1,6 kg davon wurden mit 2,4 kg Polyamid 12 in der Schmelze bei 290 °C gemischt.

Vergleichsbeispiel C (gemäß EP-OS 0 147 874)

2,0 kg Polyphenylenether gemäß Beispiel 1.1, 2,0 kg Polyamid 66 und 40 g eines alternierenden Styrol-Maleinsäureanhydrid-Copolymeren (hergestellt aus 50,0 g (510 mmol) Maleinsäureanhydrid und 53,5 g (514 mmol) Styrol mit 0,5 ml Perbenzoesäure-tert.-butylester in 400 ml Chlorbenzol bei 90 bis 115 °C; $Eta_{red}$ = 1,41 dl/g) werden in einem Doppelschneckenextruder bei einer Schmelzetemperatur von 290 °C gemischt. Anschließend wird granuliert und getrocknet.

Beispiele 3.1 bis 3.3

Die gemäß Beispiel 2 hergestellten Polyphenylenether-Pfropfcopolymeren werden nach den Angaben in Tabelle 1 mit Polyamiden gemischt und in einem Doppelschneckenextruder bei 290 °C umgeschmolzen, stranggranuliert und getrocknet. Die Produkte werden zu Normkörpern verspritzt und geprüft.

Vergleichsbeispiele D bis F (gemäß JP-OS 84/86 653)

40 Teile Polyphenylenether gemäß Beispiel 1.1 werden in 80 Teilen Toluol gelöst, mit den aus Tabelle

1 ersichltichen Mengen an Maleinsäureanhydrid und Styrol sowie 0,48 (vgl. D) bzw. 0,64 Teilen Di-tert.-butylperoxid (vgl. E und F) versetzt und 15 Stunden unter Rückfluß gekocht. Die Lösungen wurden anschließend auf Trockenbleche gegossen, im Vakuum eingedunstet und anschließend bei 120 °C bis zur Gewichtskonstanz getrocknet. Die erhaltenen Pfropfcopolymeren wurden im Verhältnis 40 : 60 mit Polyamid 6 (ULTRAMID[R] B4) auf einem Doppelschneckenextruder abgemischt.

Tabelle 1:

| Zusammensetzung und Eigenschaften der Formmassen ohne Schlagzähkomponente | | | | | | | | |
|---|---|---|---|---|---|---|---|---|
| Beispiel | Polyphenylenether | Teile Maleinsäureanhydrid | Styrol | Polyamid[a)] | | $a_K$[b)] (kJ/m³) | $\varepsilon_R$* (%) | Vicattemperatur B/50 (°C) |
| | | | | Art | Teile | | | |
| A | 40 | 0,40 | - | PA 12 | 60 | 1 | 2 | 160 |
| B | 40 | 0,40 | - | PA 12 | 60 | 3 | 38 | 162 |
| 3.1 | 40 | 0,40 | 0,48 | PA 12 | 61,3 | 9 | 66 | 164 |
| C | 50 | c) | c) | PA 66 | 50 | 1 | 2 | 209 |
| 3.2 | 50 | 0,50 | 0,60 | PA 66 | 50 | 3 | 22 | 209 |
| 3.3 | 40 | 0,40 | 0,48 | PA 6 | 61,3 | 9 | 33 | 196 |
| D | 40 | 2,33 | 2,48 | PA 6 | 67,2 | 5 | 16 | 191 |
| E | 40 | 4,66 | 4,96 | PA 6 | 74,4 | 4 | 2 | 187 |
| F | 40 | 0,40 | 9,22 | PA 6 | 74,4 | 7 | 30 | 181 |

a) PA 12 = VESTAMID[R] L 1901 (HÜLS AKTIENGESELLSCHAFT)
PA 66 = ULTRAMID[R] A4 (BASF AKTIENGESELLSCHAFT)
PA 6 = ULTRAMID[R] B4 (BASF AKTIENGESELLSCHAFT)
b) Kerbschlagzähigkeit bei Raumtemperatur
c) 1 Teil eines Copolymeren aus 0,48 Teilen Maleinsäureanhydrid und 0,52 Teilen Styrol
*E = Epsilon

Tabelle 1 läßt erkennen, daß die Reißdehnungs- und Kerbschlagzähigkeitswerte erheblich zurückgehen,

- wenn man eine physikalische Mischung aus Polyphenylenether, Maleinsäureanhydrid und Polyamid einsetzt,
- wenn man versucht, Maleinsäureanhydrid radikalisch ohne Comonomeres auf Polyphenylenether aufzupfropfen,
- wenn das Copolymere aus Styrol und Maleinsäureanhydrid nicht auf den Polyphenylenether aufgepfropft, sondern physikalisch beigemischt wird und
- wenn eine über den Bereich der Erfindung hinausgehende Menge Maleinsäureanhydrid zusammen mit Styrol auf den Polyphenylenether aufgepfropft wird.

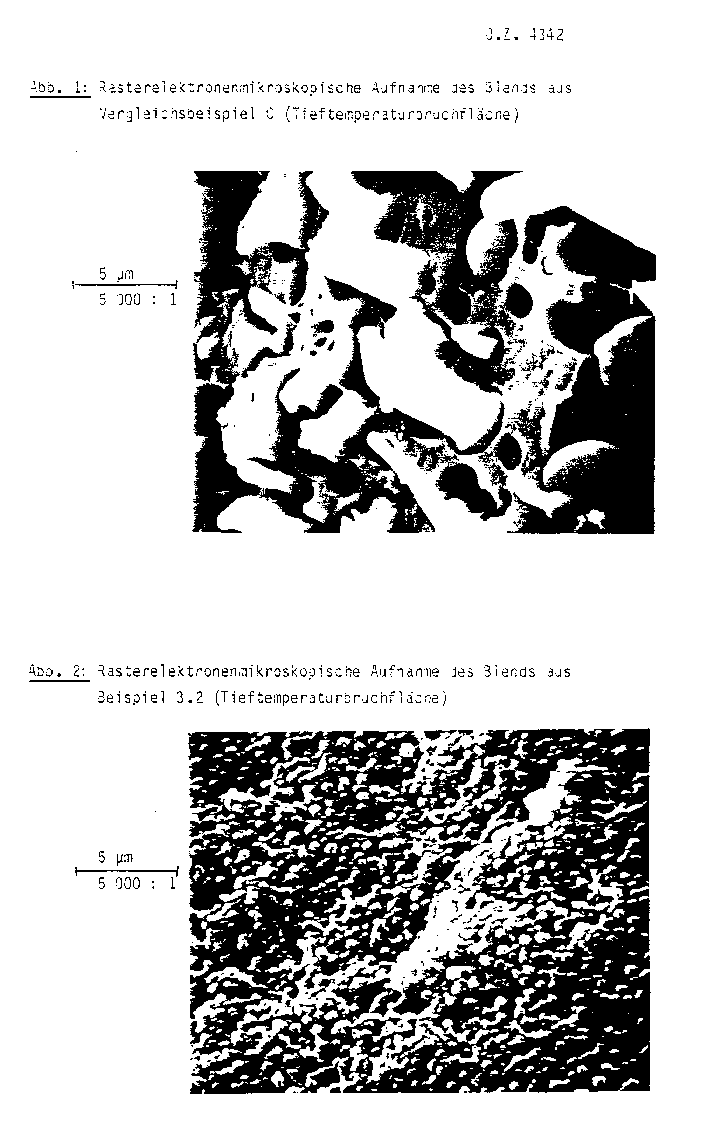

Um Blends mit gutem Eigenschaftsbild zu erhalten, ist also eine spezifische Pfropfung des Polyphenylenethers unbedingt erforderlich. Besonders deutlich sieht man die Unterschiede bei rasterelektronischen Aufnahmen der Tieftemperaturbruchflächen: Während beim Vergleichsbeispiel C der Polyphenylenether in Form von langen, ca. 1 bis 3 µm dicken Fasern ohne Phasenhaftung dispergiert ist, liegen beim Beispiel 3.2 Kügelchen des gepfropften Polyphenylenethers mit einem Durchmesser von etwa 0,5 µm vor (siehe Abbildungen 1 und 2). Bereits dieser Vergleich läßt erkennen, daß die Phasenhaftung, die verantwortlich für die mechanischen Eigenschaften ist, im letzteren Falle wesentlich besser ist.

Wird der Anteil an Styrol gemäß JP-OS 84/86 653 über die durch die Erfindung vorgegebene Menge hinaus erhöht, so äußert sich dies in einer verringerten Wärmeformbeständigkeit. Das Vergleichsbeispiel F zeigt im Vergleich mit Beispiel 3.3 deutlich, daß nach dem bisherigen Stand der Technik Formmassen erhalten werden, die verglichen mit der vorliegenden Erfindung eine niedrigere Wärmeformbeständigkeit aufweisen.

4. Schlagzähkomponenten

Beispiel 4.1 Polyoctenylen

Es wird ein Polyoctenylen mit einem J-Wert von 120 $cm^3/g$ und einem trans-Gehalt von 80 % eingesetzt. Ein solches Produkt ist unter dem Namen VESTENAMER[R] 8012 im Handel erhältlich (Hersteller: HÜLS AKTIENGESELLSCHAFT, D-4370 Marl). Weitere Kenndaten dieses Produktes sind der Zeitschrift "Kautschuk, Gummi, Kunststoffe" 1981, Seiten 185 bis 190, sowie dem Hüls-Merkblatt Nr. 2247 "VESTENAMER[R] 8012" zu entnehmen. Das Polyoctenylen kann beispielsweise auch nach K.J. Ivin "Olefin Metathesis", Academic Press, Seiten 236 ff., 1983, und den dort angegebenen weiteren Literaturstellen hergestellt werden.

Beispiel 4.2 EPDM-Kautschuk

Es wird ein Sequenz-EPDM mit einer Mooney-Viskosität (ML 1+4/100 °C) von 85 eingesetzt (Terkomponente: Ethylidennorbornen). Ein solches Produkt ist unter dem Namen BUNA[R] AP 437 im Handel erhältlich (Hersteller: BUNAWERKE HÜLS GmbH, D-4370 Marl 1).

5. Formmassen mit Schlagzähkomponente

Beispiel 5.1 Mischung aus Polyphenylenether und Polyoctenylen oder EPDM-Kautschuk

90 Teile Polyphenylenether gemäß Beispiel 1.1 sowie 10 Teile VESTENAMER[R] 8012 gemäß Beispiel 4.1 werden in 810 Teilen Toluol gelöst. Die Lösung wird auf 70 % aufkonzentriert. Das noch verbliebene Lösemittel wird mittels eines Entgasungsextruders entfernt. Es wird granuliert und getrocknet. Die Pfropfung der Mischung erfolgt analog zu Beispiel 2. Die Titration ergibt 0,96 Gewichtsprozent aufgepfropftes Maleinsäureanhydrid.

Die gepfropfte Mischung wird nach den Angaben in Tabelle 2 mit VESTAMID[R] L 1901 gemischt und in einem Zweischneckenextruder bei 290 °C umgeschmolzen, stranggranuliert und getrocknet. Die Produkte werden zu Normkörpern verspritzt und geprüft.

Beispiel 5.2

Analog zu Beispiel 5.1 werden 10 Teile BUNA[R] AP 437 gemäß Beispiel 4.2 mit 90 Teilen Polyphenylenether gemäß Beispiel 1.1 gemischt und gepfropft. Die Titration ergibt 0,92 Gew.-% aufgepropftes Maleinsäureanhydrid. Anschließend stellt man in analoger Weise Formmassen mit VESTAMID[R] L 1901 her und prüft die erhaltenen Formteile.

Tabelle 2:

| Zusammensetzung und Eigenschaften der Formmassen mit Schlagzähkomponente | | | | | | | | | |
|---|---|---|---|---|---|---|---|---|---|
| Beispiel | Polyphenylenether | Polyoctenylen | EPDM | Teile Maleinsäureanhydrid | Styrol | Polyamid 12 | $^{a}K^{a)}$ ($kJ/m^3$) | $^{E}R^{*}$ (%) | Vicattemperatur B/50 (°C) |
| 5.1 | 36 | 4 | - | 0,40 | 0,48 | 61,3 | 19 | 87 | 164 |
| 5.2 | 36 | - | 4 | 0,40 | 0,48 | 61,3 | 10 | 147 | 164 |

a) Kerbschlagzähigkeit bei Raumtemperatur

*E = Epsilon

**Ansprüche**

1. Thermoplastische Formmassen auf Basis von Polyphenylenethern, Polyamiden und gegebenenfalls weiteren Zusatzstoffen,
dadurch gekennzeichnet,
daß sie
70 bis 250 Teile eines Polyamids und
100 Teile eines Pfropfcopolymeren enthalten,
wobei letzteres durch Umsetzung von 100 Teilen eines Polyphenylenethers mit 0,1 bis 6 Teilen einer Mischung aus 10 bis 50 Mol-% Maleinsäureanhydrid und 90 bis 50 Mol-% einer vinylaromatischen Verbindung hergestellt wurde.

2. Thermoplastische Formmassen nach Anspruch 1,
dadurch gekennzeichnet,
daß als vinylaromatische Verbindung Styrol verwendet wird.

3. Thermoplastische Formmassen nach den Ansprüchen 1 und 2, dadurch gekennzeichnet,
daß der Polyphenylenether zu 80 bis 100 % aus Einheiten der Formel I und zu 20 bis 0 % aus davon verschiedenen Einheiten der Formel II aufgebaut ist,

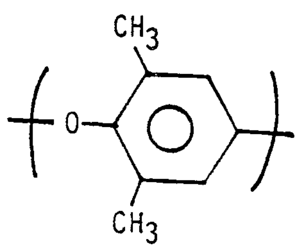

I

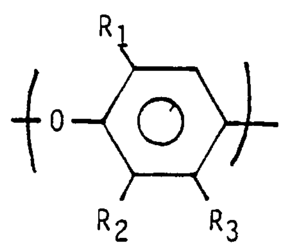

II

wobei $R_1$, $R_2$ und $R_3$ unabhängig voneinander Wasserstoffe, Alkyloder Arylreste mit bis zu 10 C-Atomen oder Benzylreste mit der Einschränkung bedeuten, daß $R_1$ nur dann Wasserstoff sein darf, wenn $R_2$ ein tertiärer Alkylrest, insbesondere ein tertiärer Butylrest, ist.

4. Thermoplastische Formmassen nach den Ansprüchen 1 bis 3,
dadurch gekennzeichnet,
daß der Polyphenylenether eine Viskositätszahl J zwischen 20 und 80 $cm^3/g$ aufweist.

5. Thermoplastische Massen nach den Ansprüchen 1 bis 4,
dadurch gekennzeichnet,
daß das Zahlenmittel des Molekulargewichts der Polyamide zwischen 10 000 und 50 000 liegt.

6. Thermoplastische Massen nach Anspruch 5,
dadurch gekennzeichnet,
daß die dem Polyamid zugrundeliegenden Monomeren zu mindestens 50 % aliphatischer Struktur sind.

7. Thermoplastische Massen nach Anspruch 6,
dadurch gekennzeichnet,
daß als Polyamid PA 6, PA 46, PA 66, PA 612, PA 1012, PA 11 oder PA 12 eingesetzt wird.

8. Thermoplastische Massen nach den Ansprüchen 1 bis 7,
dadurch gekennzeichnet,
daß sie als Zusatzstoff bis zu 200 Teile, vorzugsweise 10 bis 40 Teile, einer gegebenenfalls funktionalisierten Schlagzähkomponente enthalten.

9. Thermoplastische Massen nach Anspruch 8,
dadurch gekennzeichnet,
daß die Schlagzähkomponente Polyoctenylen und/oder ein EP(D)M-Kautschuk ist.

10. Verfahren zur Herstellung der thermoplastischen Massen nach den Ansprüchen 1 bis 9,
dadurch gekennzeichnet,
daß man 100 Teile Polyphenylenether zwischen 100 und 310 °C mit 0,1 bis 6 Teilen einer Mischung aus

10 bis 50 Mol-% Maleinsäureanhydrid und 90 bis 50 Mol-% einer vinylaromatischen Verbindung umsetzt und den so gepfropften Polyphenylenether in der Schmelze mit Polyamiden mischt.

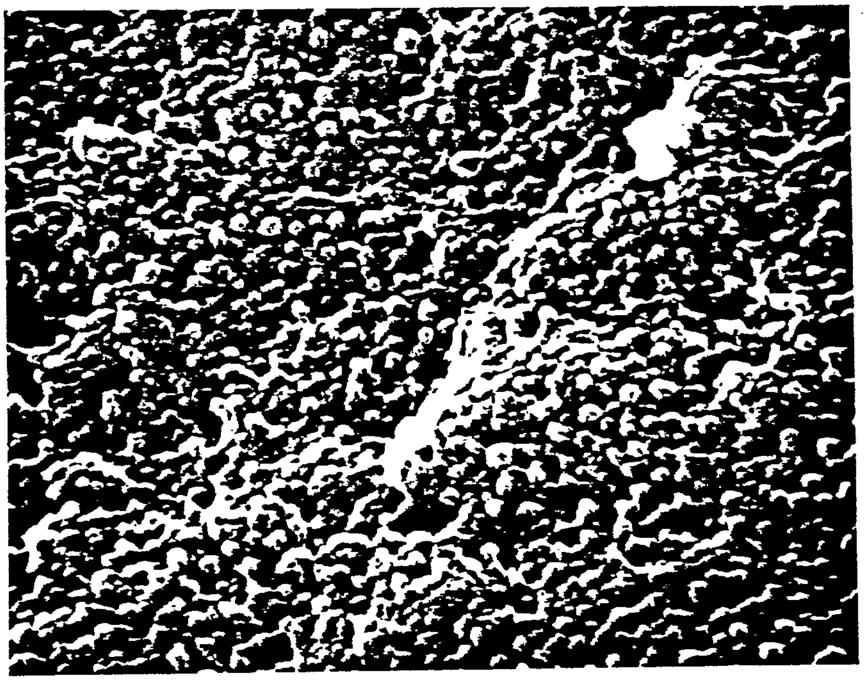

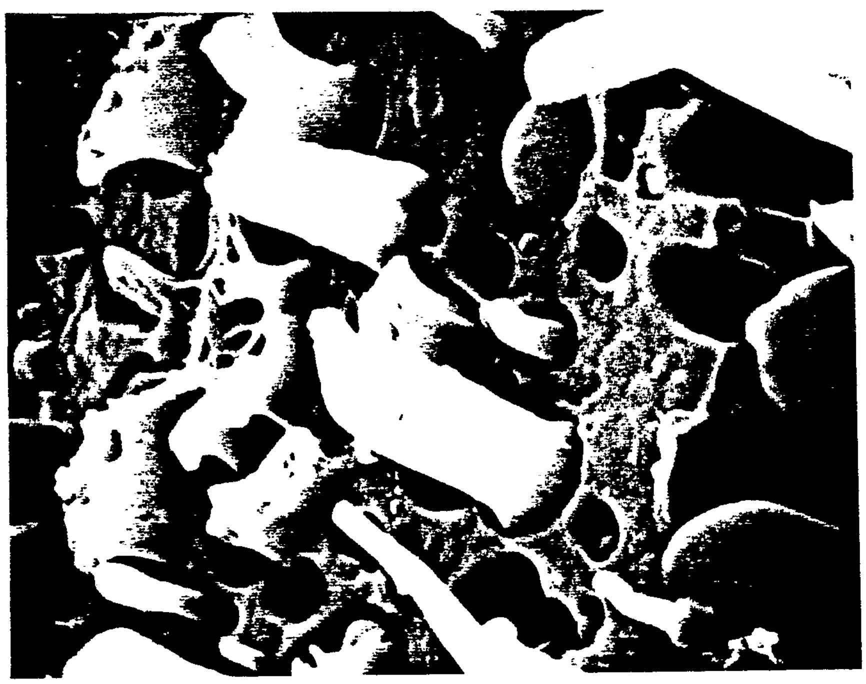

O.Z. 4342

Abb. 1: Rasterelektronenmikroskopische Aufnahme des Blends aus Vergleichsbeispiel C (Tieftemperaturbruchfläche)

5 µm

5 000 : 1

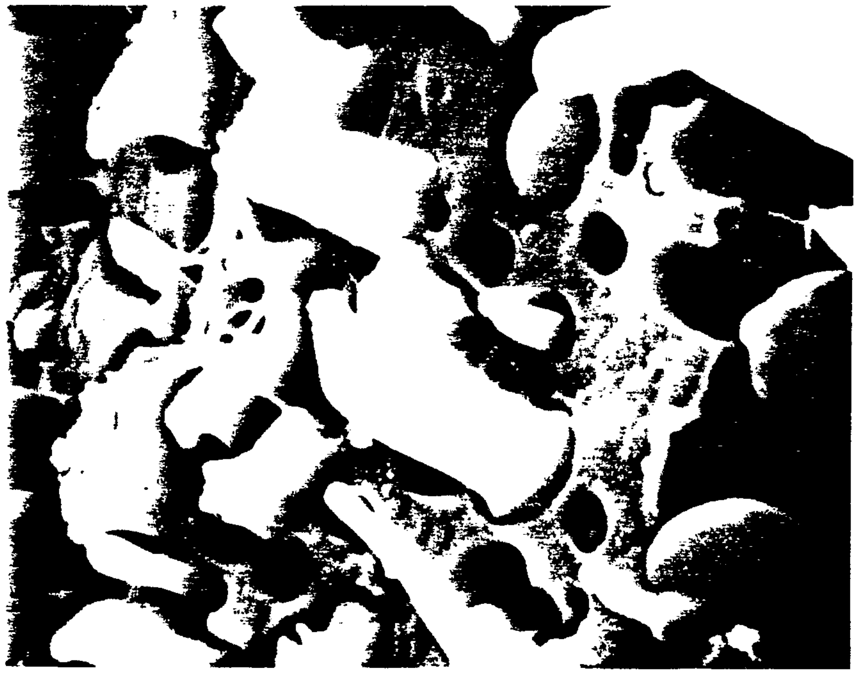

Abb. 2: Rasterelektronenmikroskopische Aufnahme des Blends aus Beispiel 3.2 (Tieftemperaturbruchfläche)

5 µm

5 000 : 1